# EUROPÄISCHE PATENTSCHRIFT

(11) **EP 2 713 563 B1**
(45) Veröffentlichungstag und Bekanntmachung des Hinweises auf die Patenterteilung: **02.08.2017**
(21) Anmeldenummer: 12186557.0
(22) Anmeldetag: 28.09.2012
(51) Int. Cl.: H04L 12/42, H04L 12/44

(54) **Redundant betreibbares industrielles Kommunikationssystem, Kommunikationsgerät und Verfahren zum redundanten Betrieb eines industriellen Kommunikationssystems**
Redundant industrial communication system, communication apparatus and method for redundant operation of an industrial communication system
Système de communication industriel pouvant fonctionner de manière redondante, appareil de communication et procédé de fonctionnement redondant d'un système de communication industriel

(43) Veröffentlichungstag der Anmeldung: 02.04.2014
(73) Patentinhaber: Siemens Aktiengesellschaft, 80333 München (DE)
(72) Erfinder: Kießling, Marcel, 90556 Cadolzburg (DE); Lohmeyer, Joachim, 91161 Hilpoltstein (DE)

(56) Entgegenhaltungen:
- EP-A1- 2 362 585
- US-A1- 2003 223 377
- US-A1- 2010 088 442

## Beschreibung

Ein industrielles Automatisierungssystem umfaßt üblicherweise eine Vielzahl von über ein industrielles Kommunikationsnetz miteinander vernetzten Automatisierungsgeräten und dient im Rahmen einer Fertigungs- oder Prozeßautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie Profinet, Profibus oder Real-Time-Ethernet, verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

In EP 2 343 857 A1 ist ein Netzknoten für ein Kommunikationsnetz beschrieben, das ein erstes Teilnetz und ein mit diesem verbundenes zweites Teilnetz umfaßt. Während im ersten Teilnetz ein Spannbaum-Protokoll verwendet wird, wird im zweiten Teilnetz ein sich vom Protokoll des ersten Teilnetzes unterscheidendes zweites Protokoll verwendet. Der Netzknoten ist als ein Element für das zweite Teilnetz eingerichtet und zur Kommunikation innerhalb des zweiten Teilnetzes ausgebildet. Darüber hinaus ist der Netzknoten mittels einer Spannbaum-Funktionalität als ein Spannbaum-Hauptknoten zur Überwachung und Steuerung des zweiten Teilnetzes ausgebildet und eingerichtet. Damit kann das zweite Teilnetz vom im ersten Teilnetz verwendeten Spannbaum-Protokoll als ein virtueller Netzknoten behandelt werden, indem der Netzknoten als Spannbaum-Hauptknoten für andere Netzknoten des zweiten Teilnetzes eine Spannbaum-Protokoll-Anwendung vornimmt.

Aus WO 2010/105828 A1 ist ein Verfahren zum Betreiben eines Kommunikationsnetzes mit Redundanz-Eigenschaften bekannt, das eine Ring-Netztopologie aufweist. Innerhalb des Kommunikationsnetzes sind Kommunikationsgeräte mit ihren Datenports über Datenleitungen miteinander verbunden und tauschen auf Basis von Kommunikationsprotokollen Steuerungsdaten sowie Nutzdaten über die Datenleitungen aus. Um ein endloses Kreisen von Nachrichten in Maschen des Kommunikationsnetzes zu vermeiden, wird mittels der Kommunikationsprotokolle eine Übermittlung von Nachrichten über ausgewählte Datenports einzelner Kommunikationsgeräte mit Ausnahme von Nachrichten zur Steuerung bzw. Überwachung von Medienredundanz unterbunden. Innerhalb des Kommunikationsnetzes werden zwei unterschiedliche Kommunikationsprotokolle parallel zueinander in den Kommunikationsgeräten angewendet. Eine parallele Anwendung der unterschiedliche Kommunikationsprotokolle wird beispielsweise dadurch erzielt, eine Kontrolle über zu blockierende Datenports einem einzelnen Kommunikationsprotokoll zugewiesen wird. Alternativ dazu können für die Kommunikationsprotokolle derart Parameter gewählt werden, daß durch ein erstes Kommunikationsprotokoll keine Verbindungen blockiert werden, die entsprechend einem zweiten Kommunikationsprotokoll als aktiv gelten.

Aus DE 10 2009 048 046 A1 ist ein Verfahren zum Anschluß eines Netzsegments mit einer Linientopologie an ein Teilnetz mit einer Ringtopologie bekannt, bei dem für das Teilnetz mit der Ringtopologie ein Redundanz-Manager vorgesehen ist, die dieses Teilnetz insbesondere auf Unterbrechungen überwacht. Für das Netzsegment mit der Linientopologie ist kein Redundanz-Manager vorgesehen, sondern zwei Segment-Controller an Enden der Linientopologie, die eine Verbindung zum Teilnetz mit der Ringtopologie steuern, senden Kontrollpakete in das Netzsegment mit der Linientopologie. Dabei sorgt ein erster Segment-Controller für eine Datenverkehrsanbindung des Netzsegments mit der Linientopologie an das Teilnetz mit der Ringtopologie, während der zweite Segment-Controller seinen für eine Datenverkehrsanbindung an das Teilnetz mit der Ringtopologie vorgesehenen Anschluß in einem blockierten Zustand hält und nur die Kontrollpakete des ersten Segment-Controllers empfängt. Erkennt der zweite Segment-Controller aufgrund eines Ausbleibens der Kontrollpakete des ersten Segment-Controllers eine Unterbrechung des Netzsegments mit der Linientopologie, schaltet er seinen für eine Datenverkehrsanbindung an das Teilnetz mit der Ringtopologie vorgesehenen Anschluß in einem weiterleitenden Zustand. Nachteilig ist, daß Netzknoten innerhalb des Netzsegments mit der Linientopologie nach eine Unterbrechung einer Verbindung ihren der unterbrochenen Verbindung zugeordneten Anschluß nicht selbständig reaktivieren können, sondern auf eine Anweisung hierzu durch einen Segment-Controller warten müssen. Dies verlangsamt eine Netzrekonfiguration nach einem Verbindungsausfall.

Auch in US 8 184 527 B2 ist ein Verfahren zur Netzanbindung eines Teilrings an einen geschlossenen Ring beschrieben, bei dem zur Kopplung des Teilrings mit dem Ring ein erster und ein zweiter Switch vorgesehen sind. Dabei ist ein für eine Datenverkehrsanbindung des Teilrings an den Ring vorgesehener Anschluß des ersten oder zweiten Switchs blockiert, während ein korrespondierender Anschluß des jeweils anderen Switchs aktiviert ist. Dabei sendet der Switch mit dem aktivierten Anschluß Test-Datenpakete an den Switch mit dem blockierten Anschluß. Bei Ausbleiben dieser Test-Datenpakete schaltet der Switch mit dem blockierten Anschluß den bislang blockierten Anschluß in einen weiterleitenden Zustand um. Für den Teilring ist dabei kein Redundanz-Manager vorsehen.

Aus EP 1 575 221 A1 ist ein Verfahren zum Betrieb eines Ethernet-basierten Kommunikationsnetzes bekannt, das ein Ringsegment und ein an zwei Koppelknoten mit diesem gekoppeltes Liniensegment umfaßt. Sowohl für das Ringsegment als auch für das Liniensegment ist jeweils ein eigener Redundanz-Manager vorgesehen. Darüber hinaus sind die beiden Koppelknoten als Steuerungsnetzknoten und korrespondierender Partnernetzknoten ausgestaltet und senden sich gegenseitig Test-Nachrichten zu, um Unterbrechungen im Liniensegment zu detektieren. Diese Test-Nachrichten sind jedoch nicht für den Redundanz-Manager bestimmt, sondern ausschließlich für den Steuerungsnetzknoten bzw. für den Partnernetzknoten. In Abhängigkeit von einem Empfang dieser Test-Nachrichten schaltet der Steuerungsnetzknoten bzw. der Partnernetzknoten eine Verbindung des Liniensegments zum Ringsegment direkt am Steuerungsnetzknoten bzw. am Partnernetzknoten zu oder ab. Für den Redundanz-Manager sind eigene Test-Nachrichten vorgesehen, die von den zwischen dem Steuerungsnetzknoten und dem Partnernetzknoten ausgetauschten Test-Nachrichten entkoppelt sind. Der Redundanz-Manager wertet die zwischen dem Steuerungsnetzknoten und dem Partnernetzknoten ausgetauschten Test-Nachrichten nicht aus.

In EP 2 362 585 A1 ist ein prozessorbasiertes Steuerungssystem beschrieben, das eine Arithmetikeinheit, zwei Kommunikationseinheiten und eine Kommunikationssteuerungseinheit umfaßt, die zwischen der Arithmetikeinheit und den beiden Kommunikationseinheiten vorgesehen ist. Die Kommunikationssteuerungseinheit weist eine Überwachungseinheit zur Ermittlung von Verbindungszuständen innerhalb eines Kommunikationsnetzes und eine Schalteinheit zur Verbindungsumschaltung zwischen der Arithmetikeinheit und einer der beiden Kommunikationseinheiten auf.

Der vorliegenden Erfindung liegt die Aufgabe zugrunde, ein redundant betreibbares industrielles Kommunikationssystem zu schaffen, das eine einfach konfigurierbare und mit kurzen Rekonfigurationszeiten wiederherstellbare redundante Ankopplung einer Linientopologie an eine Ring- oder Baumtopologie ermöglicht, sowie ein dafür geeignetes Kommunikationsgerät und ein Verfahren zum redundanten Betrieb eines solchen Kommunikationssystems anzugeben.

Diese Aufgabe wird erfindungsgemäß durch ein Kommunikationssystem mit den in Anspruch 1 angegebenen Merkmalen, durch ein Kommunikationsgerät mit den in Anspruch 10 angegebenen Merkmalen sowie durch ein Verfahren mit den in Anspruch 11 angegebenen Merkmalen gelöst. Vorteilhafte Weiterbildungen der vorliegenden Erfindung sind in den abhängigen Ansprüchen angegeben.

Das erfindungsgemäße Kommunikationssystem umfaßt eine Mehrzahl von innerhalb einer Ring- oder Baumtopologie redundant an ein industrielles Kommunikationsnetz angebundenen Kommunikationsgeräten. Außerdem ist eine Mehrzahl von innerhalb einer Linientopologie miteinander verbundenen Kommunikationsgeräten vorgesehen. Dabei sind ein erstes und ein zweites der Linientopologie zugeordnetes Kommunikationsgerät innerhalb der Ring- oder Baumtopologie an das industrielle Kommunikationsnetz angebunden. Ein als Teilring-Redundanz-Manager innerhalb der Linientopologie eingerichtetes Kommunikationsgerät umfaßt eine Überwachungs- und Steuerungseinheit, die für ein Detektieren einer Unterbrechung innerhalb der Linientopologie anhand versendeter Test-Nachrichten eingerichtet ist. Beispielsweise indiziert eine ausbleibende Test-Nachricht eine Unterbrechung. Darüber hinaus ist die Überwachungs- und Steuerungseinheit für eine Steuerung einer Weiterleitung von Nachrichten mit Nutzdaten zwischen zwei der Linientopologie zugeordneten Anschlüssen des als Teilring-Redundanz-Manager eingerichteten Kommunikationsgeräts bei einer detektierten Unterbrechung eingerichtet. Das erste bzw. das zweite Kommunikationsgerät innerhalb der Linientopologie sind für ein Zurücksenden empfangener Test-Nachrichten an das als Teilring-Redundanz-Manager eingerichtete Kommunikationsgerät oder für ein Senden von Test-Nachrichten an das als Teilring-Redundanz-Manager eingerichtete Kommunikationsgerät eingerichtet. Dies ermöglicht einen weitumfänglichen Rückgriff auf Medienredundanzmechanismen zur einfach und schnell rekonfigurierbaren redundanten Erweiterung einer Ring- oder Baumtopologie um eine Linientopologie.

Entsprechend einer besonders bevorzugten Weiterbildung des erfindungsgemäßen Kommunikationssystems sind die innerhalb der Linientopologie miteinander verbundenen Kommunikationsgeräte für eine automatische Ermittlung des als Teilring-Redundanz-Manager eingerichteten Kommunikationsgeräts anhand eines Vergleichs von diesen Kommunikationsgeräten zugeordneten Geräteidentifikatoren bzw. Prioritäten eingerichtet. Dies ermöglicht eine weitere Verkürzung von Rekonfigurationszeiten, beispielsweise nach Verbindungsausfällen. Darüber hinaus sind die innerhalb der Linientopologie miteinander verbundenen Kommunikationsgeräte vorzugsweise für einen selbständigen Zustandsübergang eines nach einer Unterbrechung blockierten Anschlusses in einen Nutzdaten weiterleitenden Zustand eingerichtet, und zwar unabhängig von einem Eingriff eines als Teilring-Redundanz-Manager eingerichteten Kommunikationsgeräts. Dies ermöglicht eine Entlastung des Teilring-Redundanz-Managers und eine vereinfachte, schnellere Rekonfiguration beispielsweise nach Netzfehlern.

Entsprechend einer Ausgestaltung des erfindungsgemäßen Kommunikationssystems kann das erste oder zweite Kommunikationsgerät innerhalb der Linientopologie als Teilring-Redundanz-Manager eingerichtet sein. Alternativ hierzu kann auch ein drittes Kommunikationsgerät innerhalb der Linientopologie als Teilring-Redundanz-Manager eingerichtet sein. Dies ermöglicht eine flexible, anforderungsgerechte Konfiguration eines redundant betreibbaren industriellen Kommunikationssystems.

Vorzugsweise sind die innerhalb der Linientopologie miteinander verbundenen Kommunikationsgeräte bzw. die innerhalb der Ringtopologie miteinander verbundenen Kommunikationsgeräte für eine Nachrichtenübermittlung entsprechend dem Media Redundancy Protocol eingerichtet sind. Entsprechend einer weiteren vorteilhaften Ausgestaltung des erfindungsgemäßen Kommunikationssystems sind das der Linientopologie zugeordnete erste und zweite Kommunikationsgerät innerhalb einer Ringtopologie an das industrielle Kommunikationsnetz angebunden. Dabei umfassen die innerhalb der Ringtopologie redundant an das industrielle Kommunikationsnetz angebundenen Kommunikationsgeräte jeweils einen ersten und einen zweiten Anschluß für eine Verbindung mit der Ringtopologie sowie ein den ersten und zweiten Anschluß miteinander verbindendes Koppelelement. Des weiteren umfaßt ein als Ring-Redundanz-Manager innerhalb der Ringtopologie eingerichtetes Kommunikationsgerät eine Überwachungs- und Steuerungseinheit. Die Überwachungs- und Steuerungseinheit ist dabei für ein Detektieren einer Unterbrechung innerhalb der Ringtopologie anhand versendeter Test-Nachrichten und für eine Steuerung einer Weiterleitung von Nachrichten mit Nutzdaten zwischen dem ersten und zweiten Anschluß bei einer detektierten Unterbrechung eingerichtet. Dies ermöglicht eine einfache Erweiterung eines industriellen Kommunikationsnetzes mit einer Ringtopologie um einen Teilring.

Entsprechend einer alternativen Ausgestaltung des erfindungsgemäßen Kommunikationssystems sind das der Linientopologie zugeordnete erste und zweite Kommunikationsgerät innerhalb einer Baumtopologie an das industrielle Kommunikationsnetz angebunden. Dabei sind die innerhalb der Baumtopologie miteinander verbundenen Kommunikationsgeräte für eine Nachrichtenübermittlung entsprechend einem Spannbaum-Protokoll eingerichtet. Dies ermöglicht eine einfache Erweiterung eines industriellen Kommunikationsnetzes mit einer Baumtopologie um einen Teilring.

Das erfindungsgemäße Kommunikationsgerät für ein redundant betreibbares industrielles Kommunikationssystem entsprechend vorstehenden Ausführungen umfaßt mehrere Anschlüssen für eine Verbindung mit innerhalb einer Ring- oder Baumtopologie miteinander verbundenen Kommunikationsgeräten und mit innerhalb einer Linientopologie miteinander verbundenen Kommunikationsgeräten. Außerdem ist ein die Anschlüsse miteinander verbindendes Koppelelement vorgesehen. Darüber hinaus ist das erfindungsgemäße Kommunikationsgerät für ein Zurücksenden empfangener Test-Nachrichten an ein als Teilring-Redundanz-Manager innerhalb der Linientopologie eingerichtetes Kommunikationsgerät oder für ein Senden von Test-Nachrichten an das als Teilring-Redundanz-Manager eingerichtete Kommunikationsgerät eingerichtet.

Entsprechend dem erfindungsgemäßen Verfahren zum redundanten Betrieb eines industriellen Kommunikationssystems ist eine Mehrzahl von innerhalb einer Ring- oder Baumtopologie redundant an ein industrielles Kommunikationsnetz angebundenen Kommunikationsgeräten vorgesehen. Außerdem ist eine Mehrzahl von innerhalb einer Linientopologie miteinander verbundenen Kommunikationsgeräten vorgesehen, von denen ein erstes und ein zweites Kommunikationsgerät innerhalb der Ring- oder Baumtopologie an das industrielle Kommunikationsnetz angebunden sind. Die innerhalb der Linientopologie miteinander verbundenen Kommunikationsgeräte bzw. die innerhalb der Ringtopologie miteinander verbundenen Kommunikationsgeräte übermitteln Nachrichten vorzugsweise entsprechend dem Media Redundancy Protocol.

Ein als Teilring-Redundanz-Manager innerhalb der Linientopologie eingerichtetes Kommunikationsgerät umfaßt eine Überwachungs- und Steuerungseinheit, die entsprechend dem erfindungsgemäßen Verfahren eine Unterbrechung innerhalb der Linientopologie anhand versendeter Test-Nachrichten detektiert. Beispielsweise indiziert eine ausbleibende Test-Nachricht eine Unterbrechung. Darüber hinaus steuert die Überwachungs- und Steuerungseinheit eine Weiterleitung von Nachrichten mit Nutzdaten zwischen zwei der Linientopologie zugeordneten Anschlüssen des als Teilring-Redundanz-Manager eingerichteten Kommunikationsgeräts bei einer detektierten Unterbrechung. Das erste bzw. das zweite Kommunikationsgerät senden innerhalb der Linientopologie empfangene Test-Nachrichten an das als Teilring-Redundanz-Manager eingerichtete Kommunikationsgerät zurück oder senden Test-Nachrichten an das als Teilring-Redundanz-Manager eingerichtete Kommunikationsgerät. Dies ermöglicht eine einfach und schnell rekonfigurierbare redundante Erweiterung einer Ring- oder Baumtopologie um eine Linientopologie.

Entsprechend einer besonders bevorzugten Weiterbildung des erfindungsgemäßen Verfahrens ermitteln die innerhalb der Linientopologie miteinander verbundenen Kommunikationsgeräte automatisch das als Teilring-Redundanz-Manager eingerichtete Kommunikationsgerät anhand eines Vergleichs von diesen Kommunikationsgeräten zugeordneten Geräteidentifikatoren bzw. Prioritäten. Darüber hinaus leiten die innerhalb der Linientopologie miteinander verbundenen Kommunikationsgeräte vorzugsweise selbständig einen Zustandsübergang eines nach einer Unterbrechung blockierten Anschlusses in einen Nutzdaten weiterleitenden Zustand ein. Insgesamt ermöglichen diese Weiterbildungen eine vereinfachte und schnelle Netzrekonfiguration.

Das der Linientopologie zugeordnete erste und zweite Kommunikationsgerät können beispielsweise innerhalb einer Ringtopologie an das industrielle Kommunikationsnetz angebunden sein. In diesem Fall umfassen die innerhalb der Ringtopologie redundant an das industrielle Kommunikationsnetz angebundenen Kommunikationsgeräte jeweils einen ersten und einen zweiten Anschluß für eine Verbindung mit der Ringtopologie sowie ein den ersten und zweiten Anschluß miteinander verbindendes Koppelelement. Des weiteren umfaßt ein als Ring-Redundanz-Manager innerhalb der Ringtopologie eingerichtetes Kommunikationsgerät eine Überwachungs- und Steuerungseinheit umfaßt, die eine Unterbrechung innerhalb der Ringtopologie anhand versendeter Test-Nachrichten detektiert. Darüber hinaus steuert die Überwachungs- und Steuerungseinheit eine Weiterleitung von Nachrichten mit Nutzdaten zwischen dem ersten und zweiten Anschluß bei einer detektierten Unterbrechung. Entsprechend einer alternativen Ausgestaltung des erfindungsgemäßen Verfahrens können das der Linientopologie zugeordnete erste und zweite Kommunikationsgerät innerhalb einer Baumtopologie an das industrielle Kommunikationsnetz angebunden sein. In diesem Fall übermitteln die innerhalb der Baumtopologie miteinander verbundenen Kommunikationsgeräte Nachrichten entsprechend einem Spannbaum-Protokoll. Insgesamt kann eine Ring- oder Baumtopologie einfach und schnell rekonfigurierbar um eine Linientopologie erweitert werden.

Die vorliegende Erfindung wird nachfolgend an Ausführungsbeispielen anhand der Zeichnung näher erläutert. Es zeigt
- Figur 1: ein industrielles Kommunikationssystem, das ein erstes Teilnetz mit Ringtopologie und ein mit diesem verbundenes zweites Teilnetz mit Linientopologie umfaßt,
- Figur 2: das industrielle Kommunikationssystem gemäß Figur 1 mit einer veränderten Konfiguration des zweiten Teilnetzes,
- Figur 3: eine schematische Darstellung eines industriellen Kommunikationssystems, das ein Teilnetz mit Ringtopologie und drei mit diesem verbundene Teilnetze mit Linientopologie umfaßt,
- Figur 4: eine schematische Darstellung eines industriellen Kommunikationssystems, das ein Teilnetz mit Baumtopologie und ein mit diesem verbundenes Teilnetz mit Linientopologie umfaßt.

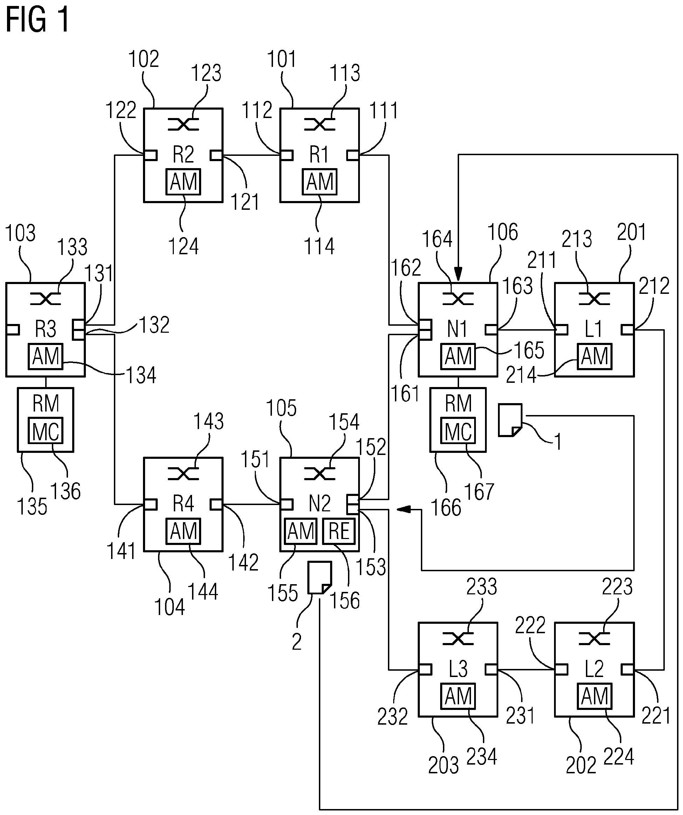

Das in Figur 1 dargestellte redundant betreibbare industrielle Kommunikationssystem umfaßt ein erstes Teilnetz mit mehreren innerhalb einer Ringtopologie miteinander verbundenen Kommunikationsgeräten 101-106. Die innerhalb der Ringtopologie miteinander verbundenen Kommunikationsgeräte 101-106 umfassen jeweils zumindest einen ersten und einen zweiten Anschluß 111-112, 121-122, 131-132, 141-142, 151-152, 161-162 für eine Verbindung des jeweiligen Kommunikationsgeräts mit der Ringtopologie. Außerdem weisen diese Kommunikationsgeräte 101-106 jeweils ein ihre Anschlüsse miteinander verbindendes Koppelelement 113, 123, 133, 143, 154, 164 auf. Von den Kommunikationsgeräten 101-106 ist ein Kommunikationsgerät 103 als Ring-Redundanz-Manager innerhalb der Ringtopologie eingerichtet und umfaßt eine Redundanz-Manager-Funktionseinheit 135 mit einer Überwachungs- und Steuerungseinheit 136. Diese Überwachungs- und Steuerungseinheit 136 detektiert eine Unterbrechung innerhalb der Ringtopologie anhand versendeter Test-Nachrichten und steuert eine Weiterleitung von Nachrichten mit Nutzdaten zwischen dem ersten und zweiten Anschluß 131-132 des als Ring-Redundanz-Manager eingerichteten Kommunikationsgeräts 103, wenn Unterbrechung detektiert wird. In einem ungestörten Betriebszustand befindet sich einer der beiden Anschlüsse 131-132 des als Ring-Redundanz-Manager eingerichteten Kommunikationsgeräts 103 bezüglich einer Weiterleitung von Nachrichten mit Nutzdaten in einem blockierten Zustand, so daß beispielsweise lediglich Test-Nachrichten weitergeleitet werden. Bei einer detektierten Unterbrechung innerhalb der Ringtopologie, die vorzugsweise durch ein Ausbleiben von Test-Nachrichten indiziert wird, veranlaßt die Überwachungs- und Steuerungseinheit 136 einen Übergang des zuvor blockierten Anschlusses 131 bzw. 132 in einen Nachrichten mit Nutzdaten weiterleitenden Zustand.

Darüber hinaus umfaßt das in Figur 1 dargestellte industrielle Kommunikationssystem ein zweites Teilnetz mit mehreren innerhalb einer Linientopologie miteinander verbundenen Kommunikationsgeräten 201-203, 105-106. Von diesen Kommunikationsgeräten 201-203, 105-106 sind ein erstes und ein zweites Kommunikationsgerät 105-106 innerhalb der Ringtopologie in das erste Teilnetz eingebunden. Die innerhalb der Linientopologie miteinander verbundenen Kommunikationsgeräte 201-203, 105-106 umfassen jeweils zumindest einen ersten und einen zweiten Anschluß 211-212, 221-222, 231-232, 151-153, 161-163 für eine Verbindung des jeweiligen Kommunikationsgeräts mit der Linientopologie. Bei den Kommunikationsgeräten 105-106 ist jeweils ein Anschluß 153, 163 für eine steuerbare Anbindung des zweiten Teilnetzes an das erste Teilnetz vorgesehen. Des weiteren weisen die dem zweiten Teilnetz zugeordneten Kommunikationsgeräte 201-203, 105-106 jeweils ein ihre Anschlüsse miteinander verbindendes Koppelelement 213, 223, 233, 154, 164 auf.

Im zweiten Teilnetz ist ein Kommunikationsgerät 106 als Teilring-Redundanz-Manager innerhalb der Linientopologie eingerichtet und umfaßt eine Redundanz-Manager-Funktionseinheit 166 mit einer Überwachungs- und Steuerungseinheit 167. Entsprechend dem in Figur 1 dargestellten Ausführungsbeispiel ist das zweite Kommunikationsgerät 106, welches das zweite Teilnetz an das erste Teilnetz anbindet, als Redundanz-Manager innerhalb der Linientopologie eingerichtet. Das erste Kommunikationsgerät 105, welches das zweite Teilnetz an das erste Teilnetz anbindet, umfaßt eine zur Überwachungs- und Steuerungseinheit 167 korrespondierende Reflektoreinheit 156 für Test-Nachrichten zur Detektion einer Unterbrechung innerhalb der Linientopologie. Grundsätzlich könnte auch das erste Kommunikationsgerät 105 als Redundanz-Manager innerhalb der Linientopologie eingerichtet sein. In diesem Fall würde das zweite Kommunikationsgerät 106 anstelle der Redundanz-Manager-Funktionseinheit 166 mit Überwachungs- und Steuerungseinheit 167 eine Reflektoreinheit aufweisen.

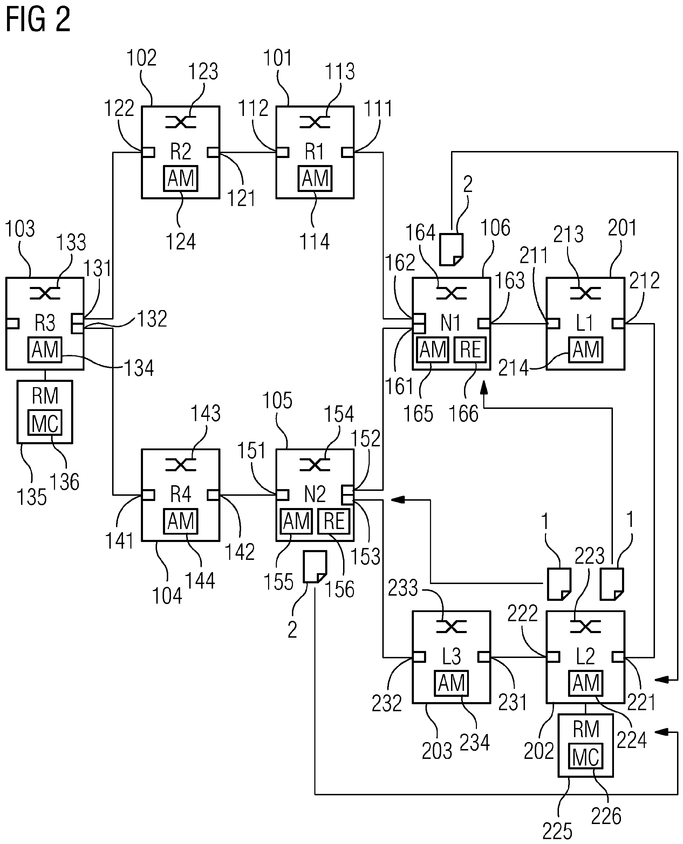

Entsprechend dem in Figur 2 dargestellten Ausführungsbeispiel ist ein drittes Kommunikationsgerät 202 innerhalb der Linientopologie als Teilring-Redundanz-Manager eingerichtet und umfaßt eine Redundanz-Manager-Funktionseinheit 225 mit einer Überwachungs- und Steuerungseinheit 226. In diesem Fall umfassen sowohl das erste Kommunikationsgerät 105 als auch das zweite Kommunikationsgerät 106 eine zur Überwachungs- und Steuerungseinheit 226 des Teilring-Redundanz-Managers korrespondierende Reflektoreinheit 156, 166'. Die innerhalb der Linientopologie miteinander verbundenen Kommunikationsgeräte 201-203, 105-106 ermitteln das als Teilring-Redundanz-Manager eingerichtete Kommunikationsgerät automatisch anhand eines Vergleichs von diesen Kommunikationsgeräten zugeordneten Geräteidentifikatoren bzw. Prioritäten. Hierzu weisen die innerhalb der Linientopologie miteinander verbundenen Kommunikationsgeräte 201-203, 105-106 jeweils eine Auto-Manager-Funktionseinheit 214, 224, 234, 155, 165 auf. Durch die Auto-Manager-Funktionseinheiten 214, 224, 234, 155, 165 erfolgt ein Abgleich der Geräteidentifikatoren bzw. Prioritäten sowie eine Auswahl des Kommunikationsgeräts als Teilring-Redundanz-Manager, das beispielsweise den Geräteidentifikator mit einem niedrigsten zugeordneten Adreßwert bzw. die höchste Priorität aufweist. Vorzugsweise umfassen auch die dem ersten Teilnetz zugeordneten Kommunikationsgeräte 101-106 jeweils eine Auto-Manager-Funktionseinheit 114, 124, 134, 144, 155, 165 zur Auswahl des Ring-Redundanz-Managers.

Die Überwachungs- und Steuerungseinheit 167, 226 des jeweiligen Teilring-Redundanz-Managers detektiert eine Unterbrechung innerhalb der Linientopologie vorzugsweise anhand versendeter Test-Nachrichten 1 und steuert eine Weiterleitung von Nachrichten mit Nutzdaten zwischen zwei der Linientopologie zugeordneten Anschlüssen des als Teilring-Redundanz-Manager eingerichteten Kommunikationsgeräts 106, 202 bei einer detektierten Unterbrechung. Durch eine ausbleibende Test-Nachricht 1 wird beispielsweise eine Unterbrechung indiziert. Je nach Konfiguration des Teilring-Redundanz-Managers senden das erste bzw. das zweite Kommunikationsgerät 105, 106, welche das zweite Teilnetz an das erste Teilnetz anbinden, innerhalb der Linientopologie empfangene Test-Nachrichten 1 mittels der Reflektoreinheit 156, 166' als Antwort-Nachrichten 2 an das jeweils als Teilring-Redundanz-Manager eingerichtete Kommunikationsgerät 106, 202 zurück. Alternativ hierzu können das das erste bzw. das zweite Kommunikationsgerät 105, 106 eigene Test-Nachrichten periodisch an das als Teilring-Redundanz-Manager eingerichtete Kommunikationsgerät 106, 202.

Die innerhalb der Linientopologie miteinander verbundenen Kommunikationsgeräte 201-203, 105-106 bzw. die innerhalb der Ringtopologie miteinander verbundenen Kommunikationsgeräte 101-106 übermitteln im vorliegenden Ausführungsbeispiel Nachrichten entsprechend dem Media Redundancy Protocol (MRP). Vorzugsweise leiten die innerhalb der Linientopologie miteinander verbundenen Kommunikationsgeräte 201-203, 105-106 selbständig einen Zustandsübergang eines nach einer Unterbrechung blockierten Anschlusses in einen Nutzdaten weiterleitenden Zustand ein. Vorteilhafterweise können die innerhalb der Linientopologie miteinander verbundenen Kommunikationsgeräte 201-203 mittels als übliche MRP-Clients realisiert werden. Änderungen sind lediglich beim ersten bzw. zweiten Kommunikationsgerät 105, 106 erforderlich, welche das zweite Teilnetz an das erste Teilnetz anbinden, und zwar hinsichtlich der Reflektoreinheit 156, 166'. Ist das erste oder zweite Kommunikationsgerät 105, 106 als Teilring-Redundanz-Manager eingerichtet, deaktiviert die jeweilige Redundanz-Manager-Funktionseinheit bei Hochlauf zunächst eine Anbindung des zweiten Teilnetzes an das erste Teilnetz. Verbindung zur Linie. Dies entspricht üblichem MRP-Verhalten. Wenn keine Test-Nachrichten empfangen werden, erfolgt eine Aktivierung des für eine Anbindung des zweiten Teilnetzes vorgesehenen Anschlusses am ersten bzw. zweiten Kommunikationsgerät 105-106 zur Übertragung von Nutzdaten.

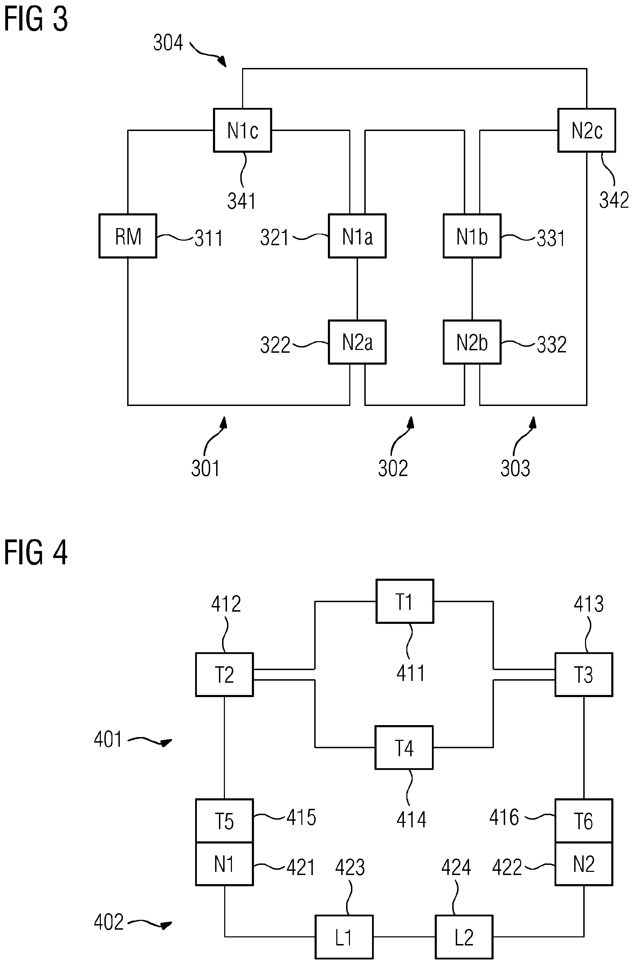

Analog zu vorangehenden Ausführungen kann ein industrielles Kommunikationssystem, das ein erstes Teilnetz 301 mit Ringtopologie und einem Ring-Redundanz-Manager 311 umfaßt, um weitere Teilnetze 302-304 mit Linientopologie erweitert werden. Entsprechend dem in Figur 3 dargestellten Ausführungsbeispiel ist an das erste Teilnetz 301 ein zweites Teilnetz 302 mit Linientopologie angebunden. An einem ersten Koppelnetzknoten 321 zwischen dem ersten und zweiten Teilnetz 301, 302 ist hierzu ein als Teilring-Redundanz-Manager eingerichtetes Kommunikationsgerät vorgesehen, während an einem zweiten Koppelnetzknoten 322 ein Kommunikationsgerät mit Reflektoreinheit vorgesehen ist. An das zweite Teilnetz 302 ist wiederum ein drittes Teilnetz 303 mit Linientopologie angebunden. Hierzu ist an einem ersten Koppelnetzknoten 331 zwischen dem zweiten und dritten Teilnetz 302, 303 ein als Teilring-Redundanz-Manager eingerichtetes Kommunikationsgerät vorgesehen, während an einem zweiten Koppelnetzknoten 332 ein Kommunikationsgerät mit Reflektoreinheit vorgesehen ist. Ein viertes Teilnetz 304 mit Linientopologie ist darüber hinaus mit einem Linienende an das erste Teilnetz 301 und mit einem anderen Linienende an das dritte Teilnetz 303 angebunden. Dabei ist an einem ersten Koppelnetzknoten 341 zwischen dem ersten und vierten Teilnetz 301, 304 ein als Teilring-Redundanz-Manager eingerichtetes Kommunikationsgerät vorgesehen, während an einem zweiten Koppelnetzknoten 342 zwischen dem dritten und vierten Teilnetz 303, 304 ein Kommunikationsgerät mit Reflektoreinheit vorgesehen ist.

Entsprechend dem in Figur 4 dargestellten Ausführungsbeispiel ist auch eine Erweiterung eines industriellen Kommunikationssystems, das ein erstes Teilnetz 401 mit Baumtopologie umfaßt, um ein zweites Teilnetz 402 oder mehrere Teilnetze mit Linientopologie möglich. Die innerhalb der Baumtopologie miteinander verbundenen Kommunikationsgeräte 411-416 übermitteln dabei Nachrichten entsprechend einem Spannbaum-Protokoll. Das zweite Teilnetz 402 umfaßt an einem ersten Koppelnetzknoten zum ersten Teilnetz 401 ein als Teilring-Redundanz-Manager eingerichtetes Kommunikationsgerät 421. An einem zweiten Koppelnetzknoten zwischen dem ersten und zweiten Teilnetz 401, 402 ist ein Kommunikationsgerät 422 mit Reflektoreinheit vorgesehen. Zwischen dem ersten und zweiten Koppelnetzknoten sind innerhalb der Linientopologie des zweiten Teilnetzes 402 zwei weitere Kommunikationsgeräte 423, 424 angeschlossen, die als übliche MRP-Clients ausgestaltet sind.

Die Merkmale der vorangehend beschriebenen Ausführungsbeispiele können sowohl einzeln als auch in beschriebener Kombination miteinander realisiert sein.

## Patentansprüche

1. Redundant betreibbares industrielles Kommunikationssystem mit
- einer Mehrzahl von innerhalb einer Ring- oder Baumtopologie redundant an ein industrielles Kommunikationsnetz angebundenen Kommunikationsgeräten (101-106),
- einer Mehrzahl von innerhalb einer Linientopologie miteinander verbundenen Kommunikationsgeräten (201-203, 105-106), von denen ein erstes und ein zweites Kommunikationsgerät (105-106) innerhalb der Ring- oder Baumtopologie an das industrielle Kommunikationsnetz angebunden sind, wobei
- ein als Teilring-Redundanz-Manager innerhalb der Linientopologie eingerichtetes Kommunikationsgerät eine Überwachungs- und Steuerungseinheit (225) umfaßt, die für ein Detektieren einer Unterbrechung innerhalb der Linientopologie anhand versendeter Test-Nachrichten (1, 2) und für eine Steuerung einer Weiterleitung von Nachrichten mit Nutzdaten zwischen zwei der Linientopologie zugeordneten Anschlüssen des als Teilring-Redundanz-Manager eingerichteten Kommunikationsgeräts bei einer detektierten Unterbrechung eingerichtet ist,
- das erste und/oder das zweite Kommunikationsgerät innerhalb der Linientopologie für ein Zurücksenden empfangener Test-Nachrichten (2) an das als Teilring-Redundanz-Manager eingerichtete Kommunikationsgerät oder für ein Senden von Test-Nachrichten (1) an das als Teilring-Redundanz-Manager eingerichtete Kommunikationsgerät eingerichtet sind/ist.

2. Kommunikationssystem nach Anspruch 1,
bei dem die innerhalb der Linientopologie miteinander verbundenen Kommunikationsgeräte (201-203, 105-106) für eine automatische Ermittlung des als Teilring-Redundanz-Manager eingerichteten Kommunikationsgeräts anhand eines Vergleichs von diesen Kommunikationsgeräten zugeordneten Geräteidentifikatoren und/oder Prioritäten eingerichtet sind.

3. Kommunikationssystem nach einem der Ansprüche 1 oder 2,
bei dem die innerhalb der Linientopologie miteinander verbundenen Kommunikationsgeräte (201-203, 105-106) für einen selbständigen Zustandsübergang eines nach einer Unterbrechung blockierten Anschlusses in einen Nutzdaten weiterleitenden Zustand eingerichtet sind.

4. Kommunikationssystem nach einem der Ansprüche 1 bis 3,
bei dem das erste oder zweite Kommunikationsgerät innerhalb der Linientopologie als Teilring-Redundanz-Manager eingerichtet ist.

5. Kommunikationssystem nach einem der Ansprüche 1 bis 3,
bei dem ein drittes Kommunikationsgerät innerhalb der Linientopologie als Teilring-Redundanz-Manager eingerichtet ist.

6. Kommunikationssystem nach einem der Ansprüche 1 bis 5,
bei dem die innerhalb der Linientopologie miteinander verbundenen Kommunikationsgeräte und/oder die innerhalb der Ringtopologie miteinander verbundenen Kommunikationsgeräte für eine Nachrichtenübermittlung entsprechend dem Media Redundancy Protocol eingerichtet sind.

7. Kommunikationssystem nach einem der Ansprüche 1 bis 6,
bei dem eine ausbleibende Test-Nachricht eine Unterbrechung indiziert.

8. Kommunikationssystem nach einem der Ansprüche 1 bis 7,
bei dem das der Linientopologie zugeordnete erste und zweite Kommunikationsgerät (105-106) innerhalb einer Ringtopologie an das industrielle Kommunikationsnetz angebunden sind, und bei dem die innerhalb der Ringtopologie redundant an das industrielle Kommunikationsnetz angebundenen Kommunikationsgeräte (101-106) jeweils einen ersten und einen zweiten Anschluß (111-112, 121-122, 131-132, 141-142, 151-152, 161-162) für eine Verbindung mit der Ringtopologie sowie ein den ersten und zweiten Anschluß miteinander verbindendes Koppelelement (113, 123, 133, 143, 154, 164) umfassen, und bei dem ein als Ring-Redundanz-Manager innerhalb der Ringtopologie eingerichtetes Kommunikationsgerät eine Überwachungs und Steuerungseinheit (135) umfaßt, die für ein Detektieren einer Unterbrechung innerhalb der Ringtopologie anhand versendeter Test-Nachrichten und für eine Steuerung einer Weiterleitung von Nachrichten mit Nutzdaten zwischen dem ersten und zweiten Anschluß bei einer detektierten Unterbrechung eingerichtet ist.

9. Kommunikationssystem nach einem der Ansprüche 1 bis 7,
bei dem das der Linientopologie zugeordnete erste und zweite Kommunikationsgerät innerhalb einer Baumtopologie an das industrielle Kommunikationsnetz angebunden sind, und bei dem die innerhalb der Baumtopologie miteinander verbundenen Kommunikationsgeräte für eine Nachrichtenübermittlung entsprechend einem Spannbaum-Protokoll eingerichtet sind.

10. Kommunikationsgerät für ein redundant betreibbares industrielles Kommunikationssystem nach einem der Ansprüche 1 bis 9 mit
- mehreren Anschlüssen (151-153, 161-163) für eine Verbindung mit innerhalb einer Ring- oder Baumtopologie miteinander verbundenen Kommunikationsgeräten (101-106) und mit innerhalb einer Linientopologie miteinander verbundenen Kommunikationsgeräten (201-203, 105-106),
- einem die Anschlüsse miteinander verbindenden Koppelelement (154, 164),
- wobei das Kommunikationsgerät innerhalb der Linientopologie für ein Zurücksenden empfangener Test-Nachrichten (2) an ein als Teilring-Redundanz-Manager innerhalb der Linientopologie eingerichtetes Kommunikationsgerät oder für ein Senden von Test-Nachrichten (1) an das als Teilring-Redundanz-Manager eingerichtete Kommunikationsgerät eingerichtet ist.

11. Verfahren zum redundanten Betrieb eines industriellen Kommunikationssystems, bei dem
- eine Mehrzahl von innerhalb einer Ring- oder Baumtopologie redundant an ein industrielles Kommunikationsnetz angebundenen Kommunikationsgeräten (101-106) vorgesehen ist,
- eine Mehrzahl von innerhalb einer Linientopologie miteinander verbundenen Kommunikationsgeräten (201-203, 105-106) vorgesehen ist, von denen ein erstes und ein zweites Kommunikationsgerät (105-106) innerhalb der Ring- oder Baumtopologie an das industrielle Kommunikationsnetz angebunden sind, wobei
- ein als Teilring-Redundanz-Manager innerhalb der Linientopologie eingerichtetes Kommunikationsgerät eine Überwachungs- und Steuerungseinheit (225) umfaßt, die eine Unterbrechung innerhalb der Linientopologie anhand versendeter Test-Nachrichten (1, 2) detektiert und eine Weiterleitung von Nachrichten mit Nutzdaten zwischen zwei der Linientopologie zugeordneten Anschlüssen des als Teilring-Redundanz-Manager eingerichteten Kommunikationsgeräts bei einer detektierten Unterbrechung steuert,
- das erste und/oder das zweite Kommunikationsgerät innerhalb der Linientopologie empfangene Test-Nachrichten (2) an das als Teilring-Redundanz-Manager eingerichtete Kommunikationsgerät zurücksenden oder Test-Nachrichten (1) an das als Teilring-Redundanz-Manager eingerichtete Kommunikationsgerät senden.

12. Verfahren nach Anspruch 11,
bei dem die innerhalb der Linientopologie miteinander verbundenen Kommunikationsgeräte (201-203, 105-106) das als Teilring-Redundanz-Managex eingerichtete Kommunikationsgerät automatisch anhand eines Vergleichs von diesen Kommunikationsgeräten zugeordneten Geräteidentifikatoren und/oder Prioritäten ermitteln.

13. Verfahren nach einem der Ansprüche 11 oder 12,
bei dem die innerhalb der Linientopologie miteinander verbundenen Kommunikationsgeräte (201-203, 105-106) selbständig einen Zustandsübergang eines nach einer Unterbrechung blockierten Anschlusses in einen Nutzdaten weiterleitenden Zustand einleiten.

14. Verfahren nach einem der Ansprüche 11 bis 13,
bei dem die innerhalb der Linientopologie miteinander verbundenen Kommunikationsgeräte und/oder die innerhalb der Ringtopologie miteinander verbundenen Kommunikationsgeräte Nachrichten entsprechend dem Media Redundancy Protocol übermitteln.

15. Verfahren nach einem der Ansprüche 11 bis 14,
bei dem eine ausbleibende Test-Nachricht eine Unterbrechung indiziert.

16. Verfahren nach einem der Ansprüche 11 bis 15,
bei dem das der Linientopologie zugeordnete erste und zweite Kommunikationsgerät (105-106) innerhalb einer Ringtopologie an das industrielle Kommunikationsnetz angebunden sind, und bei dem die innerhalb der Ringtopologie redundant an das industrielle Kommunikationsnetz angebundenen Kommunikationsgeräte (101-106) jeweils einen ersten und einen zweiten Anschluß (111-112, 121-122, 131-132, 141-142, 151-152, 161-162) für eine Verbindung mit der Ringtopologie sowie ein den ersten und zweiten Anschluß miteinander verbindendes Koppelelement (113, 123, 133, 143, 154, 164) umfassen, und bei dem ein als Ring-Redundanz-Manager innerhalb der Ringtopologie eingerichtetes Kommunikationsgerät eine Überwachungs- und Steuerungseinheit (135) umfaßt, die eine Unterbrechung innerhalb der Ringtopologie anhand versendeter Test-Nachrichten detektiert und eine Weiterleitung von Nachrichten mit Nutzdaten zwischen dem ersten und zweiten Anschluß bei einer detektiertten Unterbrechung steuert.

17. Verfahren nach einem der Ansprüche 11 bis 15,
bei dem das der Linientopologie zugeordnete erste und zweite Kommunikationsgerät (105-106) innerhalb einer Baumtopologie an das industrielle Kommunikationsnetz angebunden sind, und bei dem die innerhalb der Baumtopologie miteinander verbundenen Kommunikationsgeräte Nachrichten entsprechend einem Spannbaum-Protokoll übermitteln.

## Claims

1. Redundantly operable industrial communication system having
- a plurality of communication devices (101-106) that are redundantly linked to an industrial communication network within a ring or tree topology,
- a plurality of communication devices (201-203, 105-106) that are connected to one another within a linear topology, from which communication devices a first and a second communication device (105-106) are linked to the industrial communication network within the ring or tree topology,
wherein
- a communication device that is set up as a ring portion redundancy manager within the linear topology comprises a monitoring and control unit (225) that is set up for detecting an interruption within the linear topology using sent test messages (1, 2) and for controlling forwarding of messages containing useful data between two ports, associated with the linear topology, of the communication device that is set up as a ring portion redundancy manager when an interruption is detected,
- the first and/or the second communication device within the linear topology is/are set up for returning received test messages (2) to the communication device that is set up as a ring portion redundancy manager or for sending test messages (1) to the communication device that is set up as a ring portion redundancy manager.

2. Communication system according to Claim 1,
in which the communication devices (201-203, 105-106) that are connected to one another within the linear topology are set up for automatically ascertaining the communication device that is set up as a ring portion redundancy manager using a comparison of device identifiers and/or priorities that are associated with these communication devices.

3. Communication system according to either of Claims 1 and 2,
in which the communication devices (201-203, 105-106)that are connected to one another within the linear topology are set up for independently changing the state of a port that is blocked following an interruption to a state that forwards useful data.

4. Communication system according to one of Claims 1 to 3,
in which the first or second communication device within the linear topology is set up as a ring portion redundancy manager.

5. Communication system according to one of Claims 1 to 3,
in which a third communication device within the linear topology is set up as a ring portion redundancy manager.

6. Communication system according to one of Claims 1 to 5,
in which the communication devices that are connected to one another within the linear topology and/or the communication devices that are connected to one another within the ring topology are set up for message transmission on the basis of the media redundancy protocol.

7. Communication system according to one of Claims 1 to 6,
in which an absent test message indicates an interruption.

8. Communication system according to one of Claims 1 to 7,
in which the first and second communication devices (105-106) associated with the linear topology are linked to the industrial communication network within a ring topology, and in which the communication devices (105-106) that are redundantly linked to the industrial communication network within the ring topology each comprise a first and a second port (111-112, 121-122, 131-132, 141-142, 151-152, 161-162) for connection to the ring topology and also a coupling element (113, 123, 133, 143, 154, 164) that connects the first and second ports to one another, and in which a communication device that is set up as a ring redundancy manager within the ring topology comprises a monitoring and control unit (135) that is set up for detecting an interruption within the ring topology using sent test messages and for controlling forwarding of messages containing useful data between the first and second ports when an interruption is detected.

9. Communication system according to one of Claims 1 to 7,
in which the first and second communication devices associated with the linear topology are linked to the industrial communication network within a tree topology, and in which the communication devices that are connected to one another within the tree topology are set up for message transmission on the basis of a spanning tree protocol.

10. Communication device for a redundantly operable industrial communication system according to one of claims 1 to 9 having
- a plurality of ports (151-153, 161-163) for connection to communication devices (101-106) that are connected to one another within a ring or tree topology and to communication devices (201-203, 105-106) that are connected to one another within a linear topology,
- a coupling element (154, 164) that connects the ports to one another,
- wherein the communication device within the linear topology is set up for returning received test messages (2) to a communication device that is set up as a ring portion redundancy manager within the linear topology or for sending test messages (1) to the communication device that is set up as a ring portion redundancy manager.

11. Method for redundantly operating an industrial communication system, in which
- a plurality of communication devices (101-106) that are redundantly linked to an industrial communication network within a ring or tree topology is provided,
- a plurality of communication devices (201-203, 105-106) that are connected to one another within a linear topology is provided, from which communication devices a first and a second communication device (105-106) are linked to the industrial communication network within the ring or tree topology,
wherein
- a communication device that is set up as a ring portion redundancy manager within the linear topology comprises a monitoring and control unit (225) that detects an interruption within the linear topology using sent test messages (1, 2) and controls forwarding of messages containing useful data between two ports, associated with the linear topology, of the communication device that is set up as a ring portion redundancy manager when an interruption is detected,
- the first and/or the second communication device return(s) test messages (2) received within the linear topology to the communication device that is set up as a ring portion redundancy manager or send(s) test messages (1) to the communication device that is set up as a ring portion redundancy manager.

12. Method according to Claim 11,
in which the communication devices (201-203, 105-106) that are connected to one another within the linear topology ascertain the communication device that is set up as a ring portion redundancy manager automatically using a comparison of device identifiers and/or priorities associated with these communication devices.

13. Method according to either of Claims 11 and 12,
in which the communication devices (201-203, 105-106) that are connected to one another within the linear topology independently initiate a change of state of a port that is blocked following an interruption to a state that forwards useful data.

14. Method according to one of Claims 11 to 13,
in which the communication devices that are connected to one another within the linear topology and/or the communication devices that are connected to one another within the ring topology transmit messages on the basis of the media redundancy protocol.

15. Method according to one of Claims 11 to 14,
in which an absent test message indicates an interruption.

16. Method according to one of Claims 11 to 15,
in which the first and second communication devices (105-106) that are associated with the linear topology are linked to the industrial communication network within a ring topology, and in which the communication devices (101-106) that are redundantly linked to the industrial communication network within the ring topology each comprise a first and a second port (111-112, 121-122, 131-132, 141-142, 151-152, 161-162) for connection to the ring topology and also a coupling element (113, 123, 133, 143, 154, 164) that connects the first and second ports to one another, and in which a communication device that is set up as a ring redundancy manager within the ring topology comprises a monitoring and control unit (135) that detects an interruption within the ring topology using sent test messages and controls forwarding of messages containing useful data between the first and second ports when an interruption is detected.

17. Method according to one of Claims 11 to 15,
in which the first and second communication devices (105-106) that are associated with the linear topology are linked to the industrial communication network within a tree topology, and in which the communication devices that are linked to one another within the tree topology transmit messages on the basis of a spanning tree protocol.

## Revendications

1. Système de communication industriel pouvant fonctionner de manière redondante, comprenant
- une pluralité d'appareils (101 à 106) de communication rattachés de manière redondante à un réseau de communication industriel dans une topologie en anneau ou arborescente,
- une pluralité d'appareils (201 à 203, 105 à 106) de communication, reliés entre eux dans une topologie linéaire, dont un premier et un deuxième appareil (105 à 106) de communication sont rattachés au réseau de communication industriel dans la topologie en anneau ou arborescente,
dans lequel
- un appareil de communication, agencé en gestionnaire de redondance d'anneau partiel dans la topologie linéaire, comprend une unité (225) de contrôle et de commande, qui est agencée pour détecter une interruption dans la topologie linéaire, à l'aide de messages (1, 2) de test envoyés et pour commander un acheminement des messages ayant des données utiles entre deux bornes de l'appareil de communication agencé en gestionnaire de redondance d'anneau partiel, si une interruption est détectée,
- le premier et/ou le deuxième appareil de communication, dans la topologie linéaire, sont/est agencé pour renvoyer des messages (2) de test reçus à l'appareil de communication agencé en gestionnaire de redondance d'anneau partiel ou pour envoyer des messages (1) de test à l'appareil de communication agencé en gestionnaire de redondance d'anneau partiel.

2. Système de communication suivant la revendication 1,
dans lequel les appareils (201 à 203, 105 à 106) de communication,reliés entre eux dans la topologie linéaire, sont agencés pour déterminer automatiquement l'appareil de communication agencé en gestionnaire de redondance d'anneau partiel, à l'aide d'une comparaison d'identificateur d'appareils associés à ces appareils de communication et/ou de priorités.

3. Système de communication suivant l'une des revendications 1 ou 2, dans lequel les appareils (201 à 203, 105 à 106) de communication, reliés entre eux dans la topologie linéaire, sont agencés pour un passage automatique d'une borne bloquée après une interruption à un état continuant à acheminer des données utiles.

4. Système de communication suivant l'une des revendications 1 à 3, dans lequel le premier ou le deuxième appareil de communication est agencé, dans la topologie linéaire, en gestionnaire de redondance d'anneau partiel.

5. Système de communication suivant l'une des revendications 1 à 3, dans lequel un troisième appareil de communication est agencé, dans la topologie linéaire, en gestionnaire de redondance d'anneau partiel.

6. Système de communication suivant l'une des revendications 1 à 5, dans lequel les appareils de communication, reliés entre eux dans la topologie linéaire et/ou les appareils de communication, reliés entre eux dans la topologie en anneau, sont agencés pour une transmission de message, conformément au Media Redundancy Protocol.

7. Système de communication suivant l'une des revendications 1 à 6, dans lequel un message de test omis est indiqué comme une interruption.

8. Système de communication suivant l'une des revendications 1 à 7, dans lequel le premier et le deuxième appareils (105 à 106) de communication, associés à la topologie linéaire, sont rattachés dans une topologie en anneau au réseau de communication industriel et dans lequel les appareils (101 à 106) de communication, rattachés dans la topologie en anneau de manière redondante au réseau de communication industriel, comprennent chacun une première et une deuxième bornes (111-112, 121-122, 131-132, 141-142, 151 à 152, 161 à 162) pour une liaison à la topologie en anneau ainsi qu'un élément (113, 123, 133, 143, 154, 164) de couplage reliant entre eux la première et la deuxième bornes et dans lequel un appareil de communication, agencé en gestionnaire de redondance dans la topologie en anneau, comprend une unité (135) de contrôle et de commande, qui est agencée pour détecter une interruption dans la topologie en anneau, à l'aide de messages de test envoyés et pour commander un acheminement des messages, ayant des données utiles, entre la première et la deuxième bornes, lorsqu'une interruption est détectée.

9. Système de communication suivant l'une des revendications 1 à 7, dans lequel le premier et le deuxième appareils de communication, associés à la topologie linéaire, sont rattachés dans une topologie arborescente au réseau de communication industriel et dans lequel les appareils de communication, reliés entre eux dans la topologie arborescente, sont agencés pour une transmission de messages, conformément à un protocole d'arbre couvrant.

10. Appareil de communication pour un système de communication industriel pouvant fonctionner de manière redondante suivant l'une des revendications 1 à 9, comprenant
- plusieurs bornes (151 à 153, 161 à 163) pour une liaison à des appareils (101 à 106) de communication reliés entre eux dans une topologie en anneau ou arborescente et à des appareils (201 à 203, 105 à 106) de communication reliés entre eux dans une topologie linéaire,
- un élément (154, 164) de couplage reliant les bornes entre elles,
- dans lequel l'appareil de communication est agencé dans la topologie linéaire pour renvoyer des messages (2) de test reçus à un appareil de communication agencé dans la topologie linéaire en gestionnaire de redondance d'anneau partiel, ou pour envoyer des messages (1) de test à l'appareil de communication agencé en gestionnaire de redondance d'anneau partiel.

11. Procédé pour faire fonctionner de manière redondante un système de communication industriel, dans lequel
- il est prévu une pluralité d'appareils (101 à 106) de communication, rattachés de manière redondante à un réseau de communication industriel, dans une topologie en anneau ou arborescente,
- il est prévu une pluralité d'appareils (201 à 203, 105 à 106) de communication, reliés entre eux dans une topologie linéaire, dont un premier et un deuxième appareils (105 à 106) de communication sont rattachés au réseau de communication industriel dans la topologie en anneau ou arborescente,
dans lequel
- un appareil de communication, agencé en gestionnaire de redondance d'anneau partiel dans la topologie linéaire, comprend une unité (225) de contrôle et de commande, qui détecte une interruption dans la topologie linéaire, à l'aide de messages (1, 2) de test envoyés et qui commande, si une interruption est détectée, un acheminement de messages, ayant des données utiles, entre deux bornes, associées à la topologie linéaire, de l'appareil de communication agencé en gestionnaire de redondance d'anneau partiel,
- le premier et/ou le deuxième appareil de communication, dans la topologie linéaire, renvoie des messages (2) de test reçus à l'appareil de communication agencé en gestionnaire de redondance d'anneau partiel, ou envoie des messages (1) de test à l'appareil de communication agencé en gestionnaire de redondance d'anneau partiel.

12. Procédé suivant la revendication 11,
dans lequel les appareils (201 à 203, 105 à 106) de communication, reliés entre eux dans la topologie linéaire, déterminent automatiquement un appareil de communication agencé en gestionnaire de redondance d'anneau partiel à l'aide d'une comparaison d'identificateurs d'appareil associés à ces appareils de communication.

13. Procédé suivant l'une des revendications 11 ou 12,
dans lequel les appareils (201 à 203, 105 à 106) de communication, reliés entre eux dans la topologie linéaire, font débuter automatiquement un passage d'une borne bloquée après une interruption dans un état acheminant des données utiles.

14. Procédé suivant l'une des revendications 11 à 13, dans lequel les appareils de communication reliés entre eux dans la topologie linéaire et/ou les appareils de communication reliés entre eux dans la topologie en anneau, transmettent des messages conformément au Media Redundancy Protocol.

15. Procédé suivant l'une des revendications 11 à 14, dans lequel un message de test en suspens indique une interruption.

16. Procédé suivant l'une des revendications 11 à 15, dans lequel le premier et le deuxième appareils (105-106) de communication, associés à la topologie linéaire, sont rattachés, dans une topologie en anneau, au réseau de communication industriel et dans lequel les appareils (101 à 106) de communication, rattachés dans la topologie en anneau de manière redondante au réseau de communication industriel, comprennent chacun une première et une deuxième bornes (111-112, 121-122, 131-132, 141-142, 151-152, 161-162) pour une liaison à la topologie en anneau ainsi qu'un élément (113, 123, 133, 143, 154, 164) de couplage, reliant entre elles la première et la deuxième bornes et dans lequel un appareil de communication, agencé en gestionnaire de redondance d'anneau dans la topologie en anneau, comprend une unité (135) de contrôle et de commande, qui détecte une interruption dans la topologie en anneau, à l'aide de messages de test envoyés et qui commande un acheminenement des messages ayant des données utiles entre la première et la deuxième bornes, lorsqu'une interruption est détectée.

17. Procédé suivant l'une des revendications 11 à 15, dans lequel le premier et deuxième appareils (105-106) de communication, associés à la topologie linéaire, sont rattachés dans une topologie arborescente au réseau de communication industriel et dans lequel les appareils de communication, reliés entre eux dans la topologie arborescente, transmettent des messages conformément à un protocole d'arbre couvrant.
